# EUROPEAN PATENT SPECIFICATION

(11) **EP 1 523 082 B1**
(45) Date of publication and mention of the grant of the patent: **02.08.2006**
(21) Application number: 04023921.2
(22) Date of filing: 07.10.2004
(51) Int. Cl.: H02J 7/00

(54) **Battery charger with battery presence detection**
Batterieladegerät mit Anwesenheitsbestimmung der Batterie
Chargeur avec détection de présence de batterie

(30) Priority: 08.10.2003 US 509453 P
(43) Date of publication of application: 13.04.2005
(73) Proprietor: Black & Decker Inc., Newark, Delaware 19711 (US)
(72) Inventor: Watts, Fred, S., New Freedom PA 17349 (US)
(74) Representative: Bell, Ian Stephen

(56) References cited:
- EP-A- 0 865 140
- EP-A- 1 337 025
- EP-A- 1 341 286
- WO-A-02/37128
- US-A- 5 808 447
- US-B1- 6 577 883

## Description

This invention relates generally to battery chargers and more particularly to battery chargers with protection circuitry.

The battery packs for portable power tools, outdoor tools and certain kitchen and domestic appliances may include rechargeable batteries, such as lithium, nickel cadmium, nickel metal hydride and lead-acid batteries, so that they can be recharged rather than be replaced. Thereby a substantial cost saving is achieved.

It is preferable to provide a charger that recognizes when a battery pack has been connected in order to begin charging.

In accordance with the present invention, an improved battery pack charger is employed. The charger includes a controller having an input and an output, a first terminal for connecting a battery pack to the controller, a connecting line disposed between the first terminal and the input of the controller, a current source connected to the controller for providing power to the battery pack, the current source providing the power to the battery pack via the connecting line, wherein the controller sends a pulse signal into the connecting line via the output, whereby the controller determines whether the battery pack is connected to the charger by the presence of the pulse signal in the input of the controller.

Additional features and benefits of the present invention are described, and will be apparent from, the accompanying drawings and the detailed description below.

The accompanying drawings illustrate preferred embodiments of the invention according to the practical application of the principles thereof, and in which:
FIG. 1 is a simplified block diagram of a battery pack and charger;
FIG. 2 is a flowchart showing a method according to the present invention;
FIG. 3 is a schematic diagram of the charger according to the present invention.

The invention is now described with reference to the accompanying figures, wherein like numerals designate like parts.

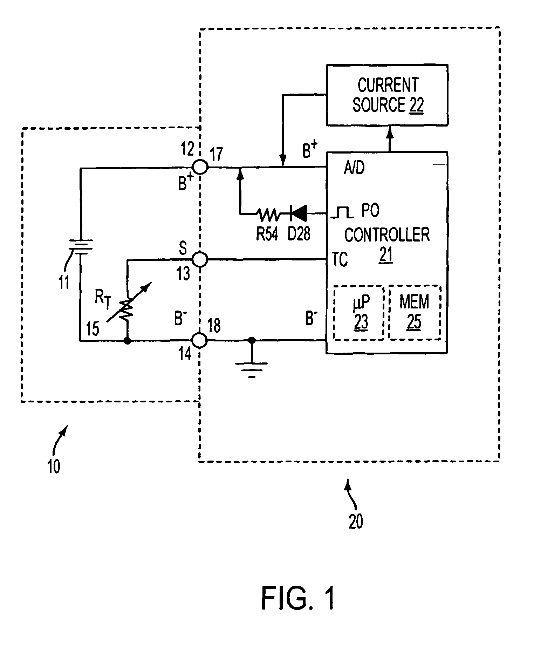

Referring to FIGS. 1-2, a battery pack 10 is connected to a charger 20. Battery pack 10 may comprise a plurality of battery cells 11 connected in series and/or parallel, which dictate the voltage and storage capacity for battery pack 10. Battery pack 10 may include three battery contacts: first battery contact 12, second battery contact 13, and third battery contact 14. Battery contact 12 is the B+ (positive) terminal for battery pack 10. Battery contact 14 is the B- or negative/common terminal. Battery contact 13 is the S or sensing terminal. Battery contacts 12 and 14 receive the charging current sent from the charger 20 (preferably from current source 22, as discussed below) for charging the battery pack 10.

As shown in FIG. 1, the battery cells 11 are connected between the battery contacts 12 and 14. In addition, preferably connected between battery contacts 13 and 14 is a temperature sensing device 15, such as a negative temperature co-efficient (NTC) resistor, or thermistor, R_{T}. The temperature sensing device is preferably in closer proximity to the cells 11 for monitoring of the battery temperature. Persons skilled in the art will recognize that other components, such as capacitors, etc., or circuits can be used to provide a signal representative of the battery temperature.

The charger 20 preferably comprises a controller 21, which in turn includes positive terminal (B+) 17 and negative (B-) terminal 18, which are coupled to battery pack 10 via battery contacts 12 and 14, respectively. The positive terminal may also act as an input, preferably an analog/digital input A/D, in order for the controller 21 to detect the battery pack voltage. In addition, the controller 21 may include another input TC, preferably an analog/digital input, which is coupled to the temperature sensing device 15 via the third battery contact 13 (S). This allows the controller 21 to monitor the battery temperature.

Controller 21 may include a microprocessor 23 for controlling the charging and monitoring operations. Controller 21 may control a charging power source for providing power to the battery pack 10, such as current source 22 that provides current to battery pack 10. This current may be a fast charging current and/or an equalization current. Current source 22 may be integrated within controller 21.

Controller 21 may have a memory 25 for storing data. Memory 25 may be integrated within controller 21 and/or microprocessor 23.

Controller 21 preferably has a pulse output PO, which sends a pulse signal into the same line that sends power to the battery pack 10. The pulse signal may have an amplitude of 5 volts. Preferably the pulse signal generated by the controller 21 goes through a diode D23 and/or a resistor R54.

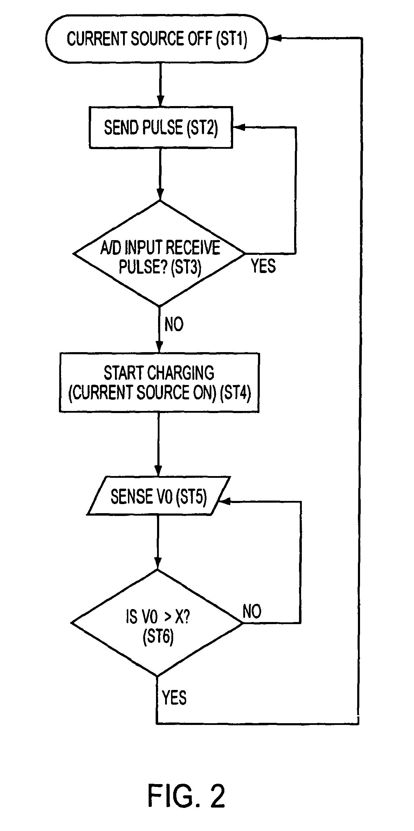

With such arrangement, controller 21 can determine whether a battery pack 10 has been connected to the charger 20. FIG. 2 is a flowchart illustrating the process for determining whether a battery pack 10 has been connected to the charger 20.

First, the current source 22 must be off (ST1). The controller 21 then sends a pulse signal via pulse output PO (ST2).

The controller 21 then checks whether the input A/D has received a pulse (ST3). If a pulse was received, a battery pack 10 is not connected to the charger 20.

On the other hand, if a pulse was not received, the controller 21 would interpret this to mean that a battery pack 10 is connected to the charger 20. Persons skilled in the art will recognize that the voltage at input A/D will be substantially constant since resistor R54 and diode D23 will not allow a significant current to generate an AC signal across the battery. Since the pulse was not received, controller 21 would then start charging battery pack 10 by turning on current source 22 (ST4).

Controller 21 then senses the battery voltage V0 via input A/D (ST5). Controller 21 compares battery voltage V0 to a certain threshold X (ST6). If battery voltage V0 is below threshold X, charging continues and controller 21 continues to sense and compare the battery voltage V0.

If battery voltage V0 exceeds (or is equal to) threshold X, controller 21 then assumes that the battery pack 10 has been removed from charger 20 and stops charging by turning the current source off. Persons skilled in the art will recognize that it is preferable to provide a relatively high threshold so as to not prematurely terminate charging, resulting in an undercharged battery pack. Accordingly, it is preferable to provide a threshold of at least 30 volts.

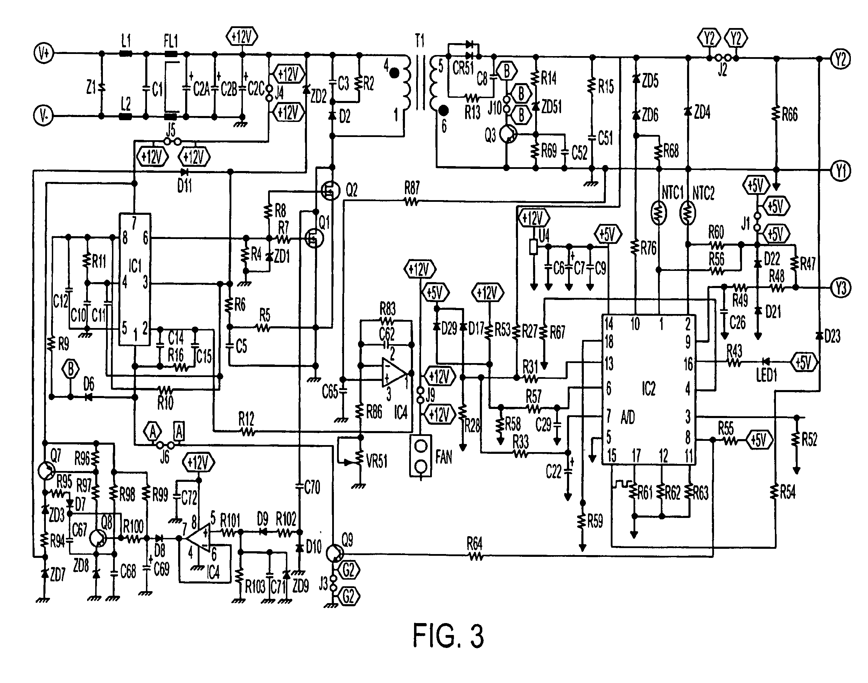

FIG. 3 is an exemplary schematic diagram of the charger of FIG. 1. Preferably, the values of the different components of are as follows:
- C1: 0.1 microfarads
- C2A: 1,000 microfarads
- C2B: 1,000 microfarads
- C2C: 1,000 microfarads
- C3: 0.1 microfarads
- C5: 102 picofarads
- C6: 0.1 microfarads
- C7: 47 microfarads
- C8: 0.001 microfarads
- C9: 0.1 microfarads
- C10: 0.001 microfarads
- C11: 220 picofarads
- C12: 0.1 microfarads
- C14: 0.01 microfarads
- C15: 0.1 microfarads
- C22: 1 microfarads
- C26: 1 microfarads
- C29: 0.1 microfarads
- C51: 0.1 microfarads
- C52: 0.01 microfarads
- C62: 100 picofarads
- C65: 0.001 microfarads
- C67: 0.01 microfarads
- C68: 0.1 microfarads
- C69: 47 microfarads
- C70: 0.0022 microfarads
- C71: 0.22 microfarads
- C72: 0.1 microfarads
- CR51: Diode FRD T220 STPR1020CT
- D2: Diode FRD 1 A 1000V DO204 BYV26E
- D6: Diode SW .3A 75V MELF
- D7: Diode SW 200mA 75V DO-35
- D8: Diode SW .3A 75V MELF
- D9: Diode SW 200mA 75V DO-35
- D10: Diode SW .3A 75V MELF
- D11: Diode SW .3A 75V MELF
- D17: Diode SW .3A 75V MELF
- D21: Diode SW .3A 75V MELF
- D22: Diode SW .3A 75V MELF
- D23: Diode SW 200mA 75V DO-35
- D29: Diode SW .3A 75V MELF
- FL1: LF 780 microhenries
- IC1: UC3845BN
- IC2: Microprocessor
- IC4: LM358
- L1: 1.1 microhenries
- L2: 1.1 microhenries
- NTC1: thermistor, 100K
- Q1: FET 60V 50A T220 IRFZ44N
- Q2: FET 60V 50A T220 IRFZ44N
- Q3: MMBT4401 SMT
- Q7: MMBT4403 SMT
- Q8: MMBT4401 SMT
- Q9: MMBT4401 SMT
- R2: 47 kiloohms
- R4: 5.1 kiloohms
- R5: 3 kiloohms
- R6: 1 kiloohms
- R7: 33 ohms
- R8: 33 ohms
- R9: 1 kiloohms
- R10: 43 kiloohms
- R11: 12 kiloohms
- R12: 220 kiloohms
- R13: 100 ohms
- R14: 18 kiloohms
- R15: 2.2 ohms
- R16: 220 kiloohms
- R27: 80.6 kiloohms
- R28: 14 kiloohms
- R31: 47.5 kiloohms
- R33: 39 kiloohms
- R43: 470 ohms
- R47: 8.25 kiloohms
- R48: 8.2 kiloohms
- R49: 10 kiloohms
- R52: 1 kiloohms
- R53: 4.02 kiloohms
- R54: 470 ohms
- R55: 4.7 kiloohms
- R56: 82 kiloohms
- R57: 2 kiloohms
- R58: 1 kiloohms
- R59: 10 kiloohms
- R60: 82 kiloohms
- R61: 100 kiloohms
- R62: 100 kiloohms
- R63: 100 kiloohms
- R64: 470 ohms
- R66: 10 kiloohms
- R67: 100 kiloohms
- R68: 1 kiloohms
- R69: 10 kiloohms
- R76: 100 kiloohms
- R83: 100 kiloohms
- R86: 910 ohms
- R87: 1 kiloohms
- R94: 330 ohms
- R95: 1.2 kiloohms
- R96: 1.5 kiloohms
- R97: 1.2 kiloohms
- R98: 30 kiloohms
- R99: 200 kiloohms
- R100: 10 kiloohms
- R101: 10 kiloohms
- R102: 300 ohms
- R103: 10 kiloohms
- T1: Transformer
- U4: Voltage Regulator IC 5V 0.1A T92 3PIN 7805
- VR51: Variable Resistor 1 kiloohms
- Z1: Varistor 20VAC 6J 1000A
- ZD1: Zener Diode 0.5W 18B MELF
- ZD2: Zener Diode 0.5W 20B MELF
- ZD3: Zener Diode 0.5W 6.2B MELF
- ZD4: Zener Diode P6KE51A
- ZD5: Zener Diode 0.5W 15B MELF
- ZD6: Zener Diode 0.5W 15B DO-35
- ZD7: Zener Diode 0.5W 5.1C MELF
- ZD8: Zener Diode 0.5W 5.1C MELF
- ZD9: Zener Diode 0.5W 12C MELF
- ZD51: Zener Diode 0.5W 36V RLZTE1139B / TZMB36 MELF

Persons skilled in the art will recognize that the pulse output PO and input are pins 15 and 7 of IC2, respectively. Persons skilled in the art will also recognize that diode D23 and resistor R54 are the same components in FIGS. 1 and 3.

Persons skilled in the art should recognize that the charger shown in FIG. 3 is connectable to a vehicle battery, rather than to an AC source. Nevertheless, persons skilled in the art will know how to modify the power supply within the charger to accept power from an AC source.

## Claims

1. A charger (20) comprising:
a controller (21) having an input (17) and an output;
a first terminal (12) for connecting a battery pack to the controller;
a connecting line disposed between the first terminal (12) and the input (17) of the controller;and
a current source (22) connected to the controller for providing power to the battery pack (10) in use, the current source providing the power to the battery pack (10) via the connecting line;
**characterised in that** the controller (21) sends a pulse signal into the connecting line via the output, whereby the controller determines whether the battery ack is connected to the charger by the presence of the pulse signal in the input (17) of the controller (21).

2. The charger of Claim 1, wherein the charger is connectable to a vehicle battery.

3. The charger of Claim 1, wherein the charger is connectable to an AC source.

4. A charger/battery pack combination comprising:
a battery pack (10);
a charger (20) for charging the battery pack comprising:
a controller (21) having an input (17) and an output;
a first terminal (12) for connecting the battery pack to the controller;
a connecting line disposed between the first terminal (12) and the input (17) of the controller;
a current source (22) connected to the controller for providing power to the battery pack (10), the current source providing the power to the battery pack via the connecting line;
**characterised in that** the controller (21) sends a pulse signal into the connecting line via the output, whereby the controller determines whether the battery pack is connected to the charger by the presence of the pulse signal in the input (17) of the controller.

5. The charger/battery pack combination of Claim 4, wherein the charger is connectable to a vehicle battery.

6. The charger/battery pack combination of Claim 4, wherein the charger is connectable to an AC source.

7. A method for detecting whether a battery pack is connected to a charger, the method **characterised by**:
providing the charger a controller having an input and an output, a first terminal for connecting the battery pack to the controller, a connecting line disposed between the first terminal and the input of the controller, a current source connected to the controller for providing power to the battery pack, the current source providing the power to the battery pack via the connecting line;
sending a pulse signal into the connecting line via the output; and
detecting a presence of the pulse signal in the input of the controller.

8. The method of Claim 7, further comprising turning off the current source prior to sending the pulse signal.

9. The method of Claim 7, further comprising turning on the current source if the pulse signal is not detected.

10. The method of Claim 7, further comprising sensing a voltage of the battery pack.

11. The method of Claim 10, further comprising comparing the voltage to a predetermined threshold.

12. The method of Claim 11, further comprising stopping a charging process if the voltage exceeds the predetermined threshold.

13. The method of Claim 11, further comprising continuing a charging process if the voltage is below the predetermined threshold.

14. The method of Claim 11, wherein the predetermined threshold is at least 30 volts.

## Patentansprüche

1. Ladegerät (20) umfassend
eine Steuerung (21) mit einem Eingang (17) und einem Ausgang,
einen ersten Anschluss (12) zum Verbinden einer Batterieeinheit mit der Steuerung,
eine Verbindung, die zwischen dem ersten Anschluss (12) und dem Eingang (17) der Steuerung angeordnet ist, und
eine Stromquelle (22), die mit der Steuerung verbunden ist, um die Batterieeinheit (10) bei der Benutzung mit Strom zu versorgen, wobei die Stromquelle die Batterieeinheit (10) über die Verbindung mit Strom versorgt,
**dadurch gekennzeichnet, dass** die Steuerung (21) ein Pulssignal über den Ausgang in die Verbindung sendet, wobei die Steuerung über das Vorhandensein des Pulssignals an dem Eingang (17) der Steuerung (21) bestimmt, ob die Batterieeinheit mit dem Ladegerät verbunden ist.

2. Ladegerät gemäß Anspruch 1, wobei das Ladegerät mit einer Fahrzeugbatterie verbunden werden kann.

3. Ladegerät gemäß Anspruch 1, wobei das Ladegerät mit einer Wechselstromquelle verbunden werden kann.

4. Ladegerät/Batterieeinheit-Kombination umfassend
eine Batterieeinheit (10),
ein Ladegerät (20) zum Laden der Batterieeinheit mit einer Steuerung (21), die einen Eingang (17) und einen Ausgang aufweist,
einem ersten Anschluss (12) zum Verbinden der Batterieeinheit mit der Steuerung,
einer Verbindung, die zwischen dem ersten Anschluss (12) und dem Eingang (17) der Steuerung angeordnet ist,
einer Stromquelle (22), die mit der Steuerung zur Versorgung der Batterieeinheit (10) mit Strom verbunden ist, wobei die Stromquelle die Batterieeinheit über die Verbindung mit Strom versorgt,
**dadurch gekennzeichnet, dass** die Steuerung (21) ein Pulssignal über den Ausgang in die Verbindung sendet, wobei die Steuerung über das Vorhandensein des Pulssignals an dem Eingang (17) der Steuerung bestimmt, ob die Batterieeinheit mit dem Ladegerät verbunden ist.

5. Ladegerät/Batterieeinheit-Kombination gemäß Anspruch 4, wobei das Ladegerät mit einer Fahrzeugbatterie verbunden werden kann.

6. Ladegerät/Batterieeinheit-Kombination gemäß Anspruch 4, wobei das Ladegerät mit einer Wechselstromquelle verbunden werden kann.

7. Verfahren zum Bestimmen, ob eine Batterieeinheit mit einem Ladegerät verbunden ist, wobei das Verfahren **gekennzeichnet ist durch** die folgenden Schritte:
Bereitstellen des Ladegeräts mit einer Steuerung, die einen Eingang und einen Ausgang, einen ersten Anschluss zum Verbinden der Batterieeinheit mit der Steuerung, eine Verbindung, die zwischen dem ersten Anschluss und dem Eingang der Steuerung angeordnet ist, eine Stromquelle, die mit der Steuerung zum Versorgen der Batterieeinheit mit Strom verbunden ist, wobei die Stromquelle die Batterieeinheit über die Verbindung mit Strom versorgt, hat;
Senden eines Pulssignals in die Verbindung über den Ausgang und
Erfassen eines Vorhandenseins des Pulssignals in dem Eingang der Steuerung.

8. Verfahren gemäß Anspruch 7, ferner unfassend ein Abschalten der Stromquelle vor dem Senden des Pulssignals.

9. Verfahren gemäß Anspruch 7, ferner umfassend ein Einschalten der Stromquelle, wenn das Pulssignal nicht erfasst wird.

10. Verfahren gemäß Anspruch 7, ferner umfassend ein Erfassen einer Spannung der Batterieeinheit.

11. Verfahren gemäß Anspruch 10, ferner umfassend ein Vergleichen der Spannung mit einem vorgegebenen Schwellwert.

12. Verfahren gemäß Anspruch 11, wobei ferner ein Ladevorgang beendet wird, wenn die Spannung den vorgegebenen Schwellwert überschreitet.

13. Verfahren gemäß Anspruch 11, wobei ferner ein Ladevorgang fortgesetzt wird, wenn die Spannung unterhalb des vorgegebenen Schwellwerts ist.

14. Verfahren gemäß Anspruch 11, wobei der vorgegebene Schwellwert wenigstens 30 Volt beträgt.

## Revendications

1. Un chargeur (20), comprenant :
un contrôleur (21), ayant une entrée (17) et une sortie ;
une première borne (12), pour connexion d'un ensemble de batteries au contrôleur ;
une ligne de connexion, disposée entre la première borne (12) et l'entrée (17) du contrôleur; et
une source de courant (22), connectée au contrôleur pour fournir de l'énergie à l'ensemble de batteries (10) en utilisation, la source de courant fournissant de l'énergie à l'ensemble de batteries (10) via la ligne de connexion,
**caractérisé en ce que** le contrôleur (21) envoie un signal pulsatoire dans la ligne de connexion via la sortie, de manière que le contrôleur détermine si l'ensemble de batteries est connecté au chargeur, par la présence du signal d'impulsion dans l'entrée (17) du contrôleur (21) .

2. Le chargeur selon la revendication 1, dans lequel le chargeur peut être connecté à une batterie de véhicule.

3. Le chargeur selon la revendication 1, dans lequel le chargeur peut être connecté à une source de courant alternatif AC.

4. Une combinaison chargeur/ensemble de batteries comprenant :
un ensemble de batteries (10) ;
un chargeur (20) pour charger l'ensemble de batteries, comprenant :
un contrôleur (21), comprenant une entrée (17) et une sortie ;
une première borne (12), pour connecter l'ensemble de batteries au contrôleur ;
une ligne de connexion, disposée entre la première borne (12) et l'entrée (17) du contrôleur ;
une source de courant (22) connectée au contrôleur pour fournir de l'énergie à l'ensemble de batteries (10), la source de courant fournissant l'énergie à l'ensemble de batteries, via la ligne de connexion,
**caractérisée en ce que** le contrôleur (21) envoie un signal pulsatoire dans la ligne de connexion via la sortie, de manière que le contrôleur détermine si l'ensemble de batteries est connecté au chargeur, par la présence du signal d'impulsion dans l'entrée (17) du contrôleur.

5. La combinaison chargeur/ensemble de batteries selon la revendication 4, dans laquelle le chargeur est susceptible d'être connecté à une batterie de véhicule.

6. La combinaison chargeur/ensemble de batteries selon la revendication 4, dans laquelle le chargeur est susceptible d'être connecté à une source de courant alternatif AC.

7. Un procédé de détection du fait qu'un ensemble de batteries est connecté à un chargeur, le procédé étant **caractérisé par** :
la fourniture au chargeur d'un contrôleur ayant une entrée et une sortie, une première borne pour connecter l'ensemble de batteries au contrôleur, une ligne de connexion disposée entre la première borne et l'entrée du contrôleur, une source de courant connectée au contrôleur pour fournir de l'énergie à l'ensemble de batteries, la source de courant fournissant l'énergie à l'ensemble de batteries, via la ligne de connexion,
l'envoi d'un signal pulsatoire dans la ligne de connexion via la sortie ; et
la détection de la présence d'un signal pulsatoire dans l'entrée du contrôleur.

8. Le procédé selon la revendication 7, comprenant en outre la mise hors service de la source de courant, avant l'envoi du signal pulsatoire.

9. Le procédé selon la revendication 7, comprenant en outre la mise en service de la source de courant, si le signal pulsatoire n'est pas détecté.

10. Le procédé selon la revendication 7, comprenant en outre la détection d'une tension de l'ensemble de batteries.

11. Le procédé selon la revendication 10, comprenant en outre la comparaison de la tension à un seuil prédéterminé.

12. Le procédé selon la revendication 11, comprenant en outre l'arrêt d'un processus de chargement, si la tension dépasse le seuil prédéterminé.

13. Le procédé selon la revendication 11, comprenant en outre la continuation d'un processus de chargement, si la tension est inférieure au seuil prédéterminé.

14. Le procédé selon la revendication 11, dans lequel le seuil prédéterminé est d'au moins 30 Volts.
